# EUROPÄISCHE PATENTANMELDUNG

(11) **EP 1 076 019 A1**
(43) Veröffentlichungstag der Anmeldung: **14.02.2001**
(21) Anmeldenummer: 99115849.4
(22) Anmeldetag: 12.08.1999
(51) Int. Cl.: B65G 19/22, B01D 21/18

(54) **Balken für Kunststoffkettenräumer**

(71) Anmelder: AVAL Kunststoffkettenräumer GmbH & Co. KG, 40213 Düsseldorf (DE)
(72) Erfinder: de Vries, Willem Gerben, 6824 LW Arnhem (NL); de Vries, Mark Steven, 6691 HH Gendt (NL)
(74) Vertreter: Stenger, Watzke & Ring Patentanwälte

(57) **Zusammenfassung**

Um einen Balken (1) für Kunststoffkettenräumer bereitzustellen, welcher einerseits in größeren Längen hergestellt und eingesetzt werden kann, ohne daß die Kettenanschlußmitnehmer verstärkt werden müssen, wird mit der Erfindung vorgeschlagen ein Balken (1) für Kunststoffkettenräumer, bestehend aus einem Kunststoffstrangprofil mit rechteckigem Querschnitt, bei welchem eine Seitenwand in beiden Längsrichtungen wenigstens teilweise offen ist und im Innenraum wenigstens ein in Balkenlängsrichtung verlaufender, zwei Seitenwände (3,4) verbindender und wenigstens eine Ecke überdeckender Steg (7,8) ausgebildet ist.

## Beschreibung

Die vorliegende Erfindung betrifft einen Balken für Kunststoffkettenräumer, bestehend aus einem Kunststoffstrangprofil mit rechteckigem Querschnitt, bei welchem eine Seitenwand in Balkenlängsrichtung wenigstens teilweise offen ist.

Balken für Kunststoffkettenräumer der gattungsgemäßen Art sind an sich bekannt und vielfältig im Einsatz. Derartige Kunststoffkettenräumer werden im Abwasserbereich, insbesondere Kläranlagen, zum Entschlammen der Beckenwände und -böden verwendet. Dazu werden an Ketten Balken befestigt, die entlang der Wände gezogen werden. Insbesondere werden U-Profil-Balken eingesetzt, wobei herkömmliche Balken Längen von 7 Metern nicht übersteigen. Die Balken unterliegen starken Torsionskräften, so daß die Mitnehmer zur Befestigung der Balken an den Ketten sehr stark ausgelegt werden müssen. Bei größeren Längen werden die Kräfte so groß, daß die Kettenförderer häufig ausfallen. Die offenen Profile füllen sich mit Schlamm und werden dadurch immer schwerer. Ein Verschließen der Profile ist nicht möglich, da die Balken dann aufschwemmen würden. Diese mechanischen Randbedingungen, sowohl statisch als auch dynamisch, haben die Balken hinsichtlich ihrer Dimensionierung begrenzt.

Ausgehend von diesem Stand der Technik liegt der vorliegenden Erfindung die **Aufgabe** zugrunde, einen Balken für Kunststoffkettenräumer bereitzustellen, welcher einerseits in größeren Längen hergestellt und eingesetzt werden kann, ohne daß die Kettenanschlußmitnehmer verstärkt werden müssen. Der Balken soll mit geringem wirtschaftlichem Aufwand herstellbar und effektiv einsetzbar sein.

Zur technischen **Lösung** dieser Aufgabe wird mit der Erfindung vorgeschlagen ein Balken für Kunststoffkettenräumer, bestehend aus einem Kunststoffstrangprofil mit rechteckigem Querschnitt, bei welchem eine Seitenwand in beiden Längsrichtungen wenigstens teilweise offen ist und im Innenraum wenigstens ein in Balkenlängsrichtung verlaufender, zwei Seitenwände verbindender und wenigstens eine Ecke überdeckender Steg ausgebildet ist.

Der erfindungsgemäße Balken weist im Inneren wenigstens einen zwei Seitenwände verbindende und wenigstens eine Ecke überdeckenden und in Balkenlängsrichtung verlaufenden Steg auf. Es hat sich überraschend gezeigt, daß die Ausbildung derartiger Innenstege die Torsionssteifigkeit der Balken derart erhöhen, daß diese ohne weiteres in größeren Längen hergestellt und eingesetzt werden können. Damit kann dem Bedarf Rechnung getragen werden, größere Becken zu verwenden, die dennoch mit den Kettenräumern bearbeitet werden können. Darüber hinaus wird durch den mindestens einen Steg der Balkeninnenraum verkleinert, so daß die Schlammansammlung reduziert wird, wodurch sich das zu erwartende Balkengewicht im Einsatz verringert. Dadurch, daß die Torsionskräfte erheblich reduziert und das Schlammvolumen verringert werden, kann der Mitnehmer zum Anschluß des Balkens an die Förderkette vereinfacht ausgelegt werden, wodurch sich Herstellung und Einsatz der Kettenräumer wirtschaftlich gestalten.

Gemäß einem vorteilhaften Vorschlag der Erfindung hat der Balken einen C-Querschnitt, gebildet aus einer Basisseitenwand, zwei rechtwinklig darauf aufgesetzten Seitenwänden, an deren Enden jeweils parallel zur Basisseitenwand zwei zueiander gerichtete, C-Schenkel bildende Seitenwandteile angesetzt sind, die zusammen schmaler sind als die Basisseitenwand. In vorteilhafter Weise verbinden die zwei Stege die Enden der C-Schenkel mit den angrenzenden Seitenwänden. Es werden also im Balkeninneren zwei in Balkenlängsrichtung verlaufende Räume mit dreieckigem Querschnitt gebildet. Das Balkeninnenvolumen wird dadurch erheblich verkleinert, der Schlammauswurf aus dem Balken bei Veränderung dessen Lage um die beiden Längsachsen wird verbessert, da die Innenstege Auswurfflächen bilden, und die Torsionssteifigkeit wird derart erhöht, daß erheblich größere Balkenlängen eingesetzt werden können.

Mit der Erfindung sind Balkenlängen von > 9000 mm einsetzbar. Eine geeignete Dimensionierung hat sich dadurch ergeben, daß die Basisseitenwand eine Breite von 185 mm, die zwei rechtwinklig daran angesetzten Seitenwände eine Breite von 90 mm, die zwei die C-Schenkel bildenden Seitenwände eine Breite von jeweils 50 mm aufweisen und die zwei Stege an den freien Kanten der die C-Schenkel bildenden Seitenwände und den dazu rechtwinklig stehenden Seitenwänden angeordnet sind. In vorteilhafter Weise werden die in beiden Längsrichtungen verlaufenden Räume mit dreieckigem Querschnitt, gebildet durch die C-Schenkel, die daran angrenzenden Seitenwände und die innenliegenden Stege, an den Balkenenden verschlossen. In diesem Zusammenhang ist auch die angegebene Dimensionierung von Bedeutung. Die verschlossenen Räume erzeugen einen Auftrieb, der so gering ist, daß er sich nicht negativ auf den Balkeneinsatz auswirkt. Dennoch zeigen die Stege eine ausreichende Torsionssteifigkeit, um entsprechende Balkenlängen einsetzen zu können, die auch in Bereiche über 10 Meter, beispielsweise 11 bis 14 Meter, liegen können. Die Art der Anordnung der Stege verringert den Schlammsammelraum im Balkeninneren und verbessert den Schlammauswurf bei Balkendrehung um die beiden Längsachsen.

Gemäß einem vorteilhaften Vorschlag der Erfindung sind in den Bereichen, in denen am Balken Mitnehmer für Räumerketten angeordnet sind, Füllstücke eingesetzt, die das Balkeninnere im wesentlichen ausfüllen. Vorteilhaft sind Füllstücke mit einer Länger von 130 mm.

Gemäß einem vorteilhaften Vorschlag der Erfindung werden die Balken aus protrudierten Kunststoffstrangprofilen abgelängt. Es handelt sich dabei um ein einfaches und wirtschaftliches Herstellungsverfahren. Die Balken können je nach Anwendungsfall in den entsprechenden Längen einstöckig ausgebildet werden. Der Verschluß an den Balkenenden kann durch Aufsetzen von Seitenkappen und Überkleben, Verscheißen oder auch durch Anspritzen erfolgen.

Mit der Erfindung wird ein neuartiger Balken für Kunststoffkettenräumer bereitgestellt, welcher trotz reduzierter Anbindungskräfte in erheblich größeren Längen ausgebildet und eingesetzt werden kann, dabei wirtschaftlich herstellbar und einsetzbar ist und durch die erfindungsgemäße Ausgestaltung des Innenraumes verbesserte Reinigungswirkungen erzielen läßt.

Weitere Vorteile und Merkmale der Erfindung ergeben sich aus der folgenden Beschreibung anhand der Figuren. Dabei zeigen:
- Figur 1: eine perspektivische Darstellung eines Endstückes eines Ausführungsbeispiels für einen Balken und
- Figur 2: eine Stirnansicht des Ausführungsbeispiels für einen Balken gemäß Figur 1.

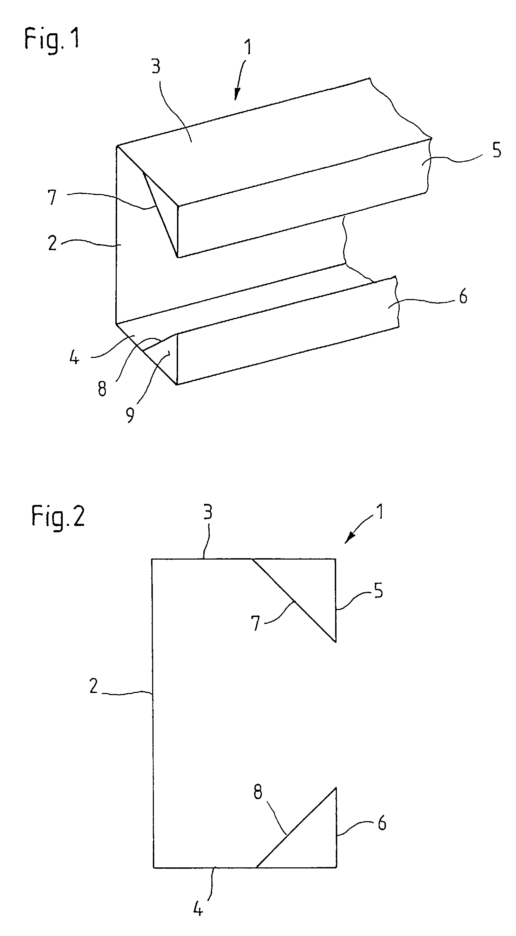

Ein Balken 1 für Kettenräumer weist einen im wesentlichen C-förmigen Querschnitt auf. Dieser wird gebildet durch eine Basisseitenwand 2, zwei daran rechtwinklig angeordnete Seitenwände 3 und 4, zwei daran rechtwinklig und parallel zur Basisseitenwand 2 angeordnete Seitenwandstücke 5 und 6, die C-Schenkel bilden, und durch zwei im Balkeninneren angeordnete und in dessen Längsrichtung verlaufende Stege 7 und 8, die die Seitenwandstücke 5 mit der Seitenwand 3 und Seitenwandstück 6 mit der Seitenwand 4 verbinden. Es ergibt sich die in Figur 2 gezeigte Stirnansicht. Der Balkeninnenraum ist damit im Schlammsammelbereich verkleinert und durch die schräge Anordnung der Stege 7 und 8 ist der Schlammauswurf bei Balkendrehung um die beiden Längsachsen verbessert. Die Stege 7 und 8 erhöhen die Torsionssteifigkeit des Balkens derart, daß dieser auch in Längen über 9 Meter ausbildbar und einsetzbar ist.

Gemäß einem Ausführungsbeispiel hat die Basisseitenwand 2 eine Breite von 185 mm, die Seitenwände 3 und 4 haben eine Breite von 90 mm, die die C-Schenkel bildenden Seitenwandstücke haben eine Breite von 50 mm und die Stege 7 und 8 sind derart eingesetzt, daß sie die freien Seitenkanten der Seitenwandstücke 5 und 6 mit den Seitenwänden 3 und 4 verbinden, so daß sich ein Querschnitt eines gleichschenkligen Dreieckes ergibt.

Die Stirnkanten der gebildeten Räume mit dreieckigem Querschnitt, angedeutet durch Bezugszeichen 9 in Figur 1, sind gemäß einem vorteilhaften Vorschlag der Erfindung verschlossen, wobei die Dimensionen der Räume gewährleisten, daß der erzeugte Auftrieb die Balken dennoch nicht aufschwimmen läßt.

Das beschriebene Ausführungsbeispiel dient der Erläuterung und ist nicht beschränkend.

### Bezugszeichenliste

- 1: Balken
- 2: Basisseitenwand
- 3: Seitenwand
- 4: Seitenwand
- 5: Seitenwandstück
- 6: Seitenwandstück
- 7: Steg
- 8: Steg
- 9: Stirnseite

## Patentansprüche

1. Balken für Kunststoffkettenräumer, bestehend aus einem Kunststoffstrangprofil mit rechteckigem Querschnitt, bei welchem eine Seitenwand in beiden Längsrichtungen wenigstens teilweise offen ist und im Innenraum wenigstens ein in Balkenlängsrichtung verlaufender, zwei Seitenwände verbindender und wenigstens eine Ecke überdeckender Steg ausgebildet ist.

2. Balken nach Anspruch 1, dadurch gekennzeichnet, daß dieser einen C-Querschnitt aufweist, gebildet aus einer Basisseitenwand, zwei rechtwinklig darauf aufgesetzten Seitenwänden, an deren Enden jeweils parallel zur Basisseitenwand zwei zueiander gerichtete, C-Schenkel bildende Seitenwandteile angesetzt sind, die zusammen schmaler sind als die Basisseitenwand.

3. Balken nach Anspruch 2, dadurch gekennzeichnet, daß im Profilinneren zwei Stege ausgebildet sind, welche die die C-Schenkel bildenden Seitenwänden mit den angrenzenden Seitenwänden verbinden.

4. Balken nach einem der vorgehenden Ansprüche, dadurch gekennzeichnet, daß die Basisseitenwand eine Breite von 185 mm, die zwei rechtwinklig daran angesetzten Seitenwände eine Breite von 90 mm, die zwei die C-Schenkel bildenden Seitenwände eine Breite von jeweils 50 mm aufweisen und die zwei Stege an den freien Kanten der die C-Schenkel bildenden Seitenwände und den dazu rechtwinklig stehenden Seitenwänden angeordnet sind.

5. Balken nach einem der vorgehenden Ansprüche, dadurch gekennzeichnet, daß dieser eine Länge von ≥ 900 mm aufweist.

6. Balken nach einem der vorgehenden Ansprüche, dadurch gekennzeichnet, daß dieser wenigstens zwei Mitnehmer zur Verbindung mit einer Förderkette aufweist.

7. Balken nach einem der vorgehenden Ansprüche, dadurch gekennzeichnet, daß im Bereich der Mitnehmer der Balken durch Füllstücke ausgefüllt ist.

8. Balken nach Anspruch 7, dadurch gekennzeichnet, daß ein Füllstück eine Länge von 130 mm aufweist.

9. Balken nach einem der vorgehenden Ansprüche, dadurch gekennzeichnet, daß der durch die C-Schenkel, die daran angrenzenden Seitenwände und die Stege gebildeten und sich in Balkenlängsrichtung erstreckenden Räume an den Balkenenden verschlossen sind.

10. Balken nach einem der vorgehenden Ansprüche, dadurch gekennzeichnet, daß dieser protrudiert ist.
